# EUROPÄISCHE PATENTSCHRIFT

(11) **EP 1 395 620 B1**
(45) Veröffentlichungstag und Bekanntmachung des Hinweises auf die Patenterteilung: **15.08.2007**
(21) Anmeldenummer: 02747321.4
(22) Anmeldetag: 24.05.2002
(51) Int. Cl.: C08F 10/10, C08F 4/00, C08F 2/01, C08F 4/06, C08F 4/12, C08F 4/16, C08F 10/08, C08F 2/06

(54) **VERFAHREN ZUR HERSTELLUNG VON HOMO- UND COPOLYMEREN DES ISOBUTENS**
METHOD FOR PRODUCING HOMOPOLYMERS AND COPOLYMERS OF ISOBUTENE
PROCEDE POUR REALISER DES COPOLYMERES ET DES HOMOPOLYMERES D'ISOBUTENE

(30) Priorität: 25.05.2001 DE 10125583
(43) Veröffentlichungstag der Anmeldung: 10.03.2004
(73) Patentinhaber: BASF Aktiengesellschaft, 67056 Ludwigshafen (DE)
(72) Erfinder: HÜFFER, Stephan, 67063 Ludwigshafen (DE); RATH, Hans, Peter, 67269 Grünstadt (DE); LANG, Gabriele, 68167 Mannheim (DE); KREMESKÖTTER, Jens, 68159 Mannheim (DE); STÖCKELMANN, Elmar, 67269 Grünstadt (DE)
(74) Vertreter: Reitstötter - Kinzebach
(86) Internationale Anmeldenummer: PCT/EP2002/005731
(87) Internationale Veröffentlichungsnummer: WO 2002/096964

(56) Entgegenhaltungen:
- EP-A- 0 273 627
- EP-A- 0 713 883
- DE-A- 19 634 450
- US-A- 5 962 604

## Beschreibung

Die vorliegende Erfindung betrifft ein kontinuierliches Verfahren zur Herstellung von Homo- und Copolymeren des Isobutens durch kationische Polymerisation von Isobuten oder Mischungen von Isobuten mit ethylenisch ungesättigten Comonomeren, die unter den Bedingungen einer kationischen Polymerisation mit Isobuten copolymerisieren.

Polyisobuten und seine Copolymere finden in vielfältiger Weise Verwendung, beispielsweise zur Herstellung von Kraftstoff- und Schmierstoff-Additiven, als Elastomere, als Klebestoffe oder Kleberohstoffe, als Grundbestandteil von Dichtungs- und Versiegelungsmassen, in Beschichtungssystemen, insbesondere solchen mit einer Barrierewirkung für Wasserdampf sowie in Kaugummimassen. Blockcopolymere des Isobutens mit vinylaromatischen Monomeren zeichnen sich beispielsweise durch ihre Elastomer-Eigenschaften und ihre hohe Gasdichte aus.

Die kationische Polymerisation von Isobuten erfolgt häufig durch Bortrifluorid-Katalyse, insbesondere durch Polymerisation von Isobuten in Gegenwart von Bortrifluorid-Komplex-Katalysatoren. Verfahren hierzu sind im Stand der Technik umfassend beschrieben (siehe beispielsweise DE-A 27 02 604, EP-A 145 235, EP-A 481 297, EP-A 671 419, EP-A 628 575, EP-A 807 641 und WO 99/31151).

Kennedy et al. beschreibt die Homo- und Copolymerisation von Isobuten unter den Bedingungen einer sogenannten "lebenden kationischen Polymerisation" (siehe J.P. Kennedy et al. in US 4,946,899, US 4,327,201, US 5,169,914, EP-A 206 756, EP-A 265 053, sowie umfassend in J.P. Kennedy, B. Ivan, "Designed Polymers by Carbocationic Macromolecular Engineering", Oxford University Press, New York 1991). Das zur kationischen Polymerisation eingesetzte Initiatorsystem umfasst in der Regel wenigstens ein Lewis-saures Metallhalogenid als Katalysator und wenigstens eine organische Verbindung, die mit der Lewis-Säure unter den Reaktionsbedingungen ein Carbokation oder einen kationogenen Komplex bildet.

Obwohl die "lebende kationische Polymerisation" zu Polymerisaten mit erhöhter molekularer Einheitlichkeit führt und überdies im Unterschied zur Bortrifluorid-Komplex-Katalyse auch die gezielte Herstellung von Blockcopolymeren und von terminal funktionalisierten Polymeren erlaubt, hat sie bislang nur akademische Bedeutung erlangt. Dies ist vermutlich zum einen auf ihre schwierige Beherrschbarkeit und zum anderen auf ihre hohe Anforderung an die Reinheit der eingesetzten Reagenzien zurückzuführen.

Die lebende kationische Polymerisation wird aufgrund ihrer schwierigen Beherrschbarkeit üblicherweise als Batch-Verfahren durchgeführt. Als Reaktionsgefässe verwendet man die hierfür üblichen Rührkessel. Ausserdem schlagen die älteren deutschen Patentanmeldungen P10061715.8 und P10061727.1 die Verwendung von üblichen, helical gewickelten Rohrreaktoren, wie sie beispielsweise auch bei der Polymerisation von Isobuten unter Bortrifluorid-Katalyse eingesetzt werden, für eine kontinuierliche Ausgestaltung des Verfahrens vor.

Eigene Versuch der Anmelderin haben gezeigt, dass die molekulare Einheitlichkeit der durch lebende kationische Polymerisation erhaltenen Polymere, insbesondere bei einer kontinuierlichen Reaktionsführung zu wünschen übrig lässt. Da die molekulare Einheitlichkeit ein wichtiges Qualitätskriterium für Homo- und Copolymeren des Isobutens ist, lag somit der vorliegenden Erfindung die Aufgabe zugrunde, ein kontinuierliches Verfahren zur Herstellung dieser Polymere bereitzustellen.

Diese Aufgabe konnte überraschenderweise dadurch gelöst werden, dass man Isobuten oder Mischungen von Isobuten mit ethylenisch ungesättigten Comonomeren in Gegenwart eines für die lebende kationische Polymerisation geeigneten Initiatorsystems kontinuierlich in einem Wendelrohrreaktor polymerisiert.

Die vorliegende Erfindung betrifft somit ein Verfahren zur Herstellung von Homo- und Copolymeren des Isobutens durch kontinuierliche kationische Polymerisation von Isobuten oder Mischungen von Isobuten mit ethylenisch ungesättigten Comonomeren in Gegenwart eines Initiatorsystems umfassend:
i) eine Lewis-Säure, ausgewählt unter kovalenten Metall-Halogen-Verbindungen und kovalenten Halbmetall-Halogen-Verbindungen,
ii) wenigstens eine aprotische organische Verbindung I mit wenigstens einer funktionellen Gruppe FG, die unter Polymerisationsbedingungen mit der Lewis-Säure ein Carbokation oder einen kationogenen Komplex bildet
in einem gegenüber der Lewis-Säure inerten organischen Lösungsmittel, dadurch gekennzeichnet, dass man die Polymerisation in einem Wendelrohrreaktor durchführt.

Wendelrohrreaktoren sind aus der WO 98/08602 bekannt, auf die hiermit wegen weiterer Details Bezug genommen wird. Unter einem Wendelrohrreaktor versteht der Fachmann einen gekrümmten, rohrförmigen Durchflussreaktor mit im wesentlichen kreisförmigem oder ellipsoidem (Rohr)Querschnitt, der dadurch gekennzeichnet ist, daß er (bzw. das Reaktionsrohr) mehrere, vorzugsweise unmittelbar aufeinanderfolgende, Krümmungen mit alternierender Krümmungsrichtung aufweist. Eine Umkehr der Krümmungsrichtung erfolgt vorzugsweise spätestens dann, wenn die ab Beginn einer Krümmung durchlaufene Strecke des Schwerpunktes der Rohrquerschnittsfläche das 200-fache des Rohrdurchmessers beträgt. Die Krümmung kann bis zu drei Umläufe um die Krümmungsachse umfassen.

Unter Rohrdurchmesser ist bei ellipsoidem Querschnitt des Reaktors der Mittelwert zwischen großer und kleiner Achse zu verstehen.

Unter Krümmungen mit alternierender Krümmungsrichtung ist hier eine Abfolge von gekrümmten Rohrsegmenten zu verstehen, wobei das jeweils nächste Rohrsegment (Abschnitt des Rohres zwischen zwei aufeinanderfolgenden Krümmungsumkehrungen, z.B. die Abschnitte zwischen zwei Achsenschnittpunkten in den Fig. 1 bis 4 der WO 98/08602) in eine andere, vorzugsweise die entgegengesetzte Richtung des vorhergehenden führt, d.h. es erfolgt mit jedem gekrümmten Rohrsegment eine Umkehr der Krümmungsrichtung.

Vorzugsweise erfolgt die Umkehr der Krümmungsrichtung spätestens dann, wenn die ab Beginn einer Krümmung durchlaufene Strecke des Schwerpunkts der Rohrquerschnittsfläche das 150-fache, insbesondere 100-fache, vorzugsweise 80-fache, besonders bevorzugt das 50-fache, 30-fache oder 25-fache des Rohrdurchmessers beträgt. Diese Strecke beträgt im allgemeinen mindestens das 5-fache des Rohrdurchmessers und insbesondere liegt sie im Bereich des 10- bis 150-fachen, insbesondere 10- bis 100-fachen, vorzugsweise 10- bis 80-fachen und besonders bevorzugt 10- bis 50-fachen, 10- bis 40-fachen oder 10- bis 30-fachen des Rohrdurchmessers.

Eine Krümmung kann nicht nur einen Teilumlauf, sondern auch einen und bis zu zwei oder drei Umläufe um die Krümmungsachse umfassen. Der Winkel, den der Normalvektor der Hauptströmungsrichtung einer Krümmung bis zur Änderung der Krümmungsrichtung überstreicht, ist somit im allgemeinen 1080°, vorzugsweise 720° und besonders bevorzugt 360°.

Vorzugsweise handelt es sich um im wesentlichen sinusoidale Krümmungen. Unter sinusoidalen Krümmungen sind im vorliegenden Fall alle Arten von, vorzugsweise periodisch wiederkehrenden, Krümmungen im wesentlichen in einer Ebene zu verstehen. Die folgende Beschreibung bezieht sich auf den Graphen (sinusoidalen Krümmungskurve), der den Verlauf des Schwerpunkts des Rohrdurchmessers des gekrümmten Rohres beschreibt. Das Verhältnis von Krümmungsamplitude (grösster Abstand des Graphen zu einer durch zwei benachbarte Wendepunkte des Graphen führenden Gerade) zu Periodenlänge/4 (=halber Abstand zwischen zwei Krümmungsumkehrpunkten, bzw. Wendepunkten der sinusoidalen Krümmungskurve) kann in einem breiten Bereich liegen. Vorzugsweise liegt es jedoch im Bereich von 5:1 bis 1:50, insbesondere 3:1 bis 1:5 und besonders bevorzugt ist es 1:1. Erfindungsgemäss werden dabei sowohl Krümmungen erfaßt, bei denen die Tangente im Wendepunkt einen von 90° verschiedenen Winkel mit der durch die Wendepunkte führenden Gerade bildet, sondern auch solche, bei denen der erwähnte Winkel 90° ist, d.h. aneinandergereihte halbkreisförmige Rohrsegmente, die besonders bevorzugt sind.

Der Krümmungsradius der gekrümmten Rohrsegmente beträgt vorzugsweise das 0,5- bis 100-fache, vorzugsweise das 1- bis 80-, 2- bis 50- oder 2- bis 20-fache des Durchmessers der Rohrquerschnittsfläche.

Die Abmessungen des Reaktors sind im allgemeinen so, daß das Verhältnis von Länge zu Durchmesser im Bereich von 100:1 bis 1000000:1, vorzugsweise 1000:1 bis 100000:1 bzw. 50000:1 liegt.

Gegebenenfalls kann eines oder mehrere der gekrümmten Rohrsegmente durch gerade Rohrsegmente verbunden sein. Das Verhältnis von gerader zu gekrümmter Rohrstrecke ist dann 5, vorzugsweise 2, insbesondere 1 und besonders bevorzugt 0,5 bzw. 0,25.

Der Wendelrohreaktor kann auch aus mehreren Reaktoreinheiten aufgebaut sein, wobei der Reaktor in jeder Einheit unterschiedliche Geometrie und/oder Abmessungen und/oder Krümmungsradien aufweisen kann.

Der Rohrquerschnitt des Reaktors ist vorzugsweise kreisförmig oder ellipsoid. Dazu zählen auch modifizierte kreisförmige oder ellipsoide Querschnitte, z.B. Querschnitte, die sich durch Runden der Ecken eines Quadrats oder eines Rechteckes ergeben. Im Falle von Drallrohren ist die Grundform des Reaktorrohrs im wesentlichen kreisförmig oder ellipsoid.

Bei ellipsoidem Querschnitt liegt das Verhältnis von großer Halbachse zu kleiner Halbachse im allgemeinem im Bereich von 5:1 bis 1:1, insbesondere im Bereich von 2:1 bis 1:1.

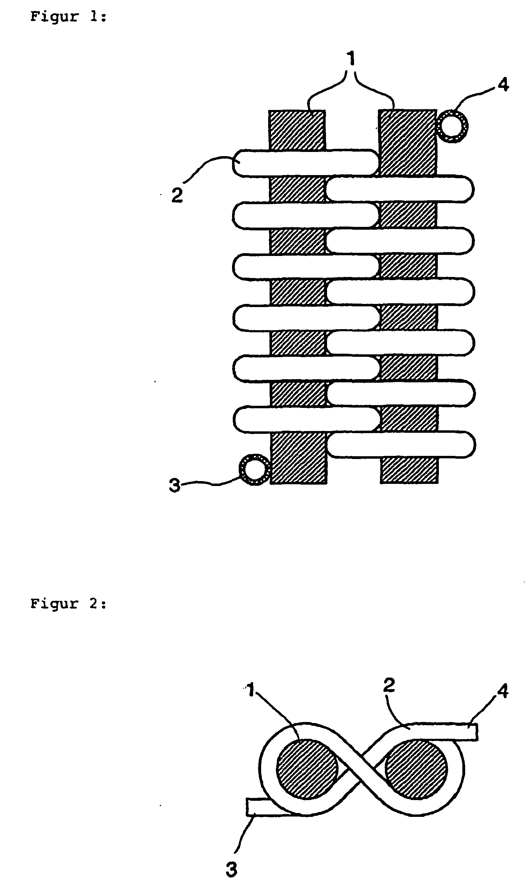

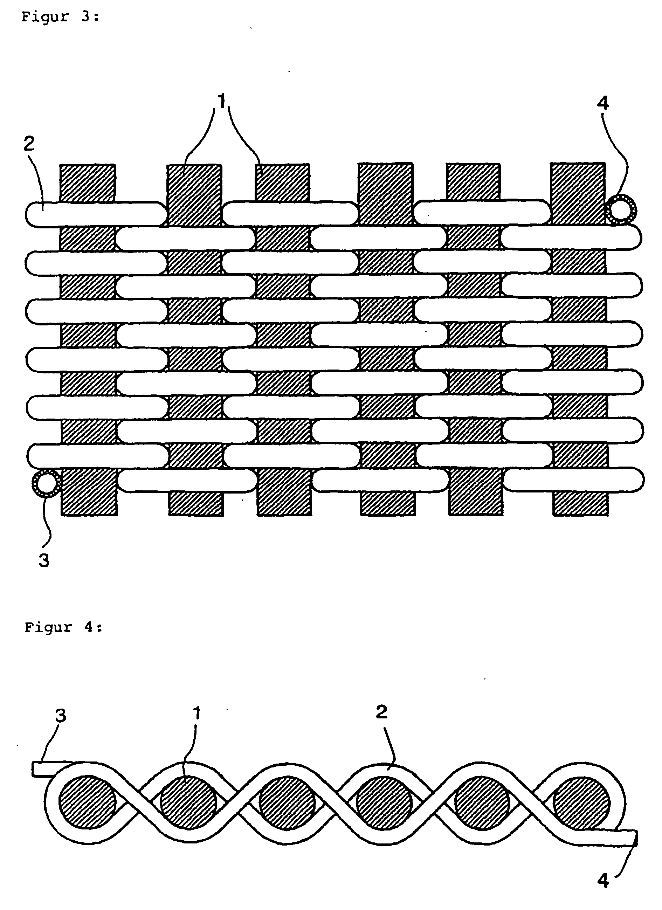

Gemäß einer bevorzugten Ausführungsform des Verfahrens setzt man einen Wendelrohrreaktor ein, der von der eintretenden Strömung her gesehen, als aufsteigende und einlagige Rohrwicklung um mindestens zwei Achsen ausgebildet ist. Die Achsen können einen Winkel zueinander bilden, vorzugsweise sind sie jedoch im wesentlichen parallel. Diese Achsen können bei nicht selbsttragender Wicklung vorzugsweise durch Rohre oder Stäbe, die rund oder eckig sein können, realisiert werden. Der Begriff "Wicklung um mindestens zwei Achsen" wird hier nur zur Veranschaulichung gebraucht. Es ist nicht erforderlich, daß die Achsen bei der Anwendung auch realisiert werden, z.B. in Form von Rohren oder Stäben. Bei einer Wicklung um 2 parallele Achsen ergibt sich z.B. die in den Figuren 1, 2 und 5 gezeigte Anordnung. Wenn man eine Wicklung um mehrere, bevorzugt in einer Ebene angeordnete Achsen vornimmt, resultiert eine bandartige bzw. wandartige Ausgestaltung, wie in den Figuren 3 und 4 gezeigt.

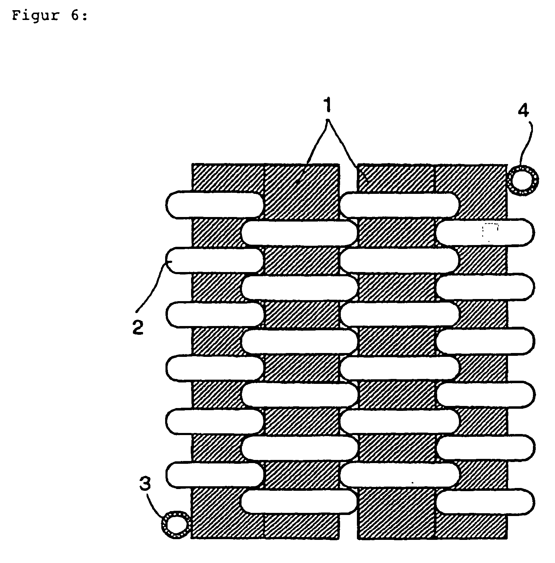

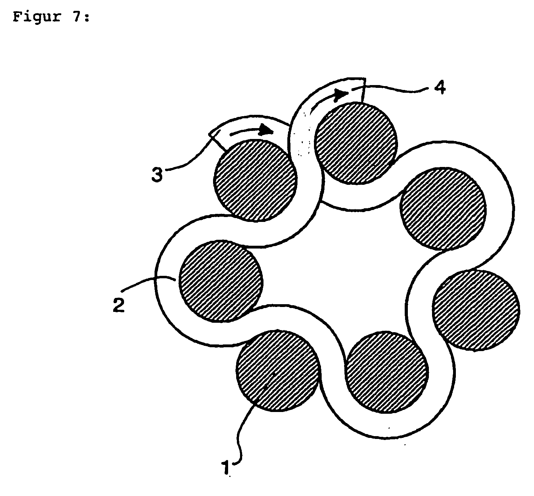

Gemäß einer anderen bevorzugten Ausführungsform des Verfahrens setzt man einen Wendelrohrreaktor ein, der als Wicklung um mehrere durch die Ecken eines Polygons, insbesondere eines gleichseitigen Polygons, und senkrecht zu dessen Fläche verlaufende im wesentlichen parallele Achsen ausgestaltet ist. Das Polygon kann eine gerade und vorzugsweise eine ungerade Anzahl von Ecken aufweisen, und zwar mindestens 3 oder 5 und vorzugsweise 7, 9 oder 11 (siehe auch Figuren 6 und 7). Eine polygonale Wicklung läßt sich durch Krümmungen entlang abgewinkelter, zu einem Polygon zusammengefügter Achsen (senkrecht zu den erwähnten vorzugsweise parallelen Achsen) verstehen.

Der Außenabstand der Achsen, um die die Wicklung geführt wird, kann in einem weiten Bereich variiert werden. Im allgemeinen beträgt er das 1- bis 10-fache, vorzugsweise 1- bis 5-fache und insbesondere 1- bis 3-fache des Durchmessers des Reaktorrohrs, wobei der einfache bis doppelte Abstand besonders bevorzugt ist.

Außerdem wird die Wicklung noch durch die Ganghöhe bestimmt. Sie beträgt im allgemeinen das 1- bis 10-fache, insbesondere das 1- bis 3-fache des Reaktordurchmessers (bei kreisförmigem Querschnitt) bzw. bei ellipsoidem Reaktorquerschnitt der Achse, die in Gangrichtung zeigt.

Der Wendelrohrreaktor kann sowohl in geschlossener Bauart als auch in offener Bauart ausgeführt sein. Unter einer geschlossenen Bauart versteht man, dass das Reaktorrohr eine in sich geschlossene Schlaufe bildet. Die Reaktionsmischung wird dabei durch geeigenete Massnahmen im Kreis geführt. Die Edukte, Lösungsmittel und Initiatorsystem werden über entsprechende Vorrichtungen in diesen Kreislauf eingeführt. In gleichem Maß wird die Reaktionsmischung kontinuierlich entnommen. Unter einer offenen Bauart versteht man dementsprechend, dass Edukte, Lösungsmittel und Initiatorsystem an einem Ende des Reaktorrohres eingespeist und an dem anderen Ende die Reaktionsmischung entnommen wird. Im erfindungsgemäßen Verfahren setzt man vorzugsweise Wendelrohrreaktoren offener Bauart ein.

Der Wendelrohrreaktor kann aus Metall, einer Metall-Legierung, Glas oder einem Kunststoff gefertigt sein. Hier bestehen keinerlei Beschränkungen. Das Rohr muß lediglich beständig gegenüber den Reaktionsteilnehmern und unter den Reaktionsbedingungen stabil sein. Wenn der Reaktor aus einem Kunststoff gefertigt ist, sind fluorhaltige Kunststoffe, z.B. Tetrafluorethylen, sowie Polyethylen, Polypropylen oder Polyvinylchlorid bevorzugt. Die Rohre des Wendelrohrreaktors können auch eine Innenbeschichtung aufweisen. Beispiele für Innenbeschichtungen sind insbesondere fluorhaltige Kunststoffe, wie Tetrafluorethylen, Polyethylen oder Polypropylen. Außerdem kann das Rohrinnere durch chemische Behandlung inertisiert sein, z.B. passiviert durch Behandlung mit Salpetersäure, elektropoliert, mechanisch poliert oder galvanisch beschichtet z.B. Ni auf PTFE.

Zweckmäßigerweise weist der Wendelrohrreaktor entlang des gekrümmten Rohres an einer oder an mehreren Stellen Mittel zum Einspeisen von der Reaktanden, Katalysatoren, Lösungsmittel etc. sowie gegebenenfalls Mittel zur Reinigung, z.B. durch Verwendung von Molchsystemen, auf. Im allgemeinen sind entlang des gekrümmten Reaktors auch Meßstellen und Einrichtungen zur Probenahme vorgesehen. Ferner weist er Mittel zum Transport der Flüssigkeitsströme auf.

Häufig kombiniert man die Mittel zum Einspeisen der flüssigen Reaktanden mit geeigneten Mischvorrichtungen, z.B. statischen Mischern und/oder dynamischen Mischern. Derartige zum Mischen von Flüssigkeiten geeignete Vorrichtungen sind dem Fachmann bekannt, z.B. aus H.-J. Henzler, "Continuous Mixing of Fluids", Ullmann's Encyclopedia of Industrial Chemistry 5th ed. on CD-Rom, Wiley, VCH 1997. Insbesondere bei den Reaktoren offener Bauart führt man die Reaktanden, vorzugsweise in Form einer Lösung in dem jeweiligen Lösungsmittel, über geeignete Vorrichtungen zum Mischen von Flüssigkeiten dem Reaktor zu.

Außerdem kann der Reaktor Pulsationsmittel, z.B. Pumpen, umfassen, um eine gepulste Reaktionsführung zu bewerkstelligen. Weiter kann zu Beginn oder an beliebiger Stelle entlang des gekrümmten Rohres eine Einrichtung vorgesehen sein, mit der, z.B. zum Zweck einer Separierung, Gasblasen eines inerten Gases, wie Stickstoff und/oder Molche eingespeist werden können. Ferner können auf Teilsegmenten des gekrümmten Reaktors, die in der Regel 10 % der Reaktorstrecke nicht übersteigen, übliche Mischelemente vorgesehen sein, beispielsweise Füllkörper, statische oder dynamische Mischer.

Der Reaktor umfaßt im allgemeinen auch Mittel zum Kühlen des Reaktionsmediums. Hierzu kann ein kühlbarer Behälter, der gegebenenfalls in Zonen unterteilt ist, brauchbar sein, der den Rohrreaktor ganz oder teilweise umschließt, um die Temperatur in der gewünschten Weise zu kontrollieren. Sofern der Reaktor um Stäbe gewickelt ist, ist es auch möglich, die Stäbe als Rohre auszugestalten und das Kühlmedium durch diese Rohre fließen zu lassen. Der Reaktor kann auch mit einer Mantelkühlung ausgestattet sein.

Die folgenden Figuren stellen in schematischer weise verschiedene Wendelreaktortypen mit unterschiedlichen Wicklungskonfigurationen dar:
- Figur 1: die Seitenansicht eines erfindungsgemäßen Reaktors in Form einer Wicklung um zwei Stäbe;
- Figur 2: eine Aufsicht auf den Reaktor gemäß Figur 1;
- Figur 3: einen erfindungsgemäßen Reaktor in Form einer Wicklung um sechs in einer Ebene angeordnete Stäbe;
- Figur 4: eine Aufsicht auf den Reaktor gemäß Figur 3;
- Figur 5: die Seitenansicht eines erfindungsgemäßen Reaktors in Form einer gegenüber Figur 1 modifizierten Wicklung um zwei Stäbe;
- Figur 6: eine schematische Teilansicht eines erfindungsgemäßen Reaktors in Form einer Wicklung um 7 an den Ecken eines gleichseitigen Polygons angeordnete Stäbe;
- Figur 7: eine schematische Aufsicht auf eine Wicklungsschleife gemäß Figur 6.

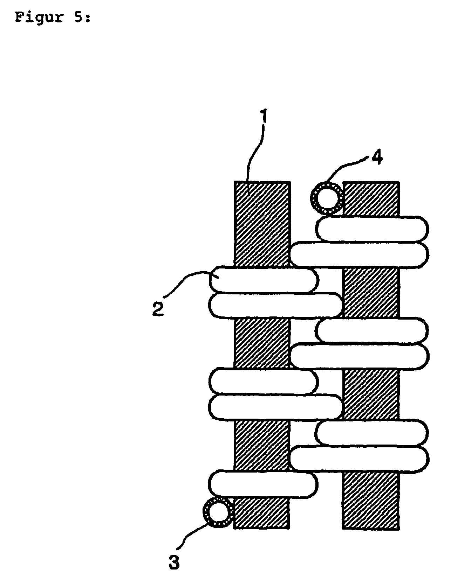

Die Figur 1 zeigt einen erfindungsgemäßen Reaktor in der einfachsten Ausführungsform als Wicklung. Der Reaktor umfaßt zwei zueinander parallele Stäbe 1. Um diese Stäbe ist ein Rohr so gewikkelt, daß ein gekrümmter Reaktor 2 mit alternierender Krümmungsrichtung resultiert. Dies ist der Figur 5 deutlich zu entnehmen, d.h. die Figur 5 zeigt eine Wicklung in Form einer liegenden Acht. Der Abstand zwischen den beiden Stäben 1 entspricht dem etwa 1,5-fachen des Durchmessers des Reaktors 2. Der Reaktor hat einen Zulauf 3 und einen Ablauf 4, d.h. das Medium im Reaktor 2 fließt in aufsteigender Richtung.

Die Figur 3 zeigt eine weitere Ausbildungsform eines erfindungsgemäßen Reaktors. Sie umfaßt 6 Stäbe 1, um die ein Rohr 2 mit einem Zulauf 3 und einem Ablauf 4 so gewickelt ist, daß ein Geflecht um die Stäbe 1 entsteht, so daß ein Reaktor in Form einer Palisadenwand resultiert. Die Figur 4 zeigt, daß die Wicklung im wesentlichen einem sinusoidalen Krümmungsverlauf entspricht.

Die Figur 5 zeigt eine alternative Ausführungsform einer Wicklung um zwei Stäbe 1. Die Wicklung ist so geführt, daß der Krümmungsradius einer Krümmung ca. 600° überstreicht.

Eine weitere Ausführungsform des erfindungsgemäßen Reaktors ist in Form einer Teilseitenansicht der Figur 6 zu entnehmen. Die Figur 7 zeigt eine einzelne Wicklungsschleife um sieben Stäbe 1, die an den Ecken eines gleichseitigen Siebenecks angeordnet sind. Die Stäbe 1 werden durchgehend mit einem Rohr 2 umwickelt, so daß eine korbartige Wicklung entsteht. Diese Vorrichtung zeichnet sich durch eine kompakte Anordnung aus und ist daher zur industriellen Anwendung besonders geeignet.

Im erfindungsgemäßen Verfahren wird die Polymerisation des Isobutens durch das Initiatorsystem aus wenigstens einer Lewis-Säure, wenigstens einer organischen Verbindung I ausgelöst. Man nimmt an, dass die Lewis-Säure mit der Verbindung I ein Carbokation oder zumindest einen kationogenen Komplex bildet, der mit der olefinisch ungesättigten Doppelbindung des Isobutens bzw. des Comonomers wechselwirkt und dabei eine positive (Partial-)Ladung im Monomer, z.B auf dem tertiären Kohlenstoffatom des Isobutens erzeugt. Diese wiederum wechselwirkt mit einem weiteren Isobutenmolekül bzw. einem weiteren Monomer unter Fortsetzung der Polymerisationsreaktion. Als Verbindungen I kommen daher alle jene Verbindungen in Betracht, die bekanntermaßen mit den obengenannten Lewis-Säuren ein Carbokation oder zumindest einen kationogenen Komplex bilden.

Die Begriffe "Carbokation" und "kationogener Komplex" sind nicht streng voneinander getrennt, sondern umfassen alle Zwischenstufen von Solvens-getrennten Ionen, Solvens-getrennten Ionenpaaren, Kontaktionenpaaren und stark polarisierten Komplexen mit positiver Partialladung an einem C-Atom der Verbindung I.

Als Verbindungen der Formel I sind grundsätzlich alle organischen Verbindungen geeignet, die wenigstens eine nucleophil verdrängbare Abgangsgruppe X aufweisen und die eine positive Ladung oder Partial-Ladung an dem C-Atom, welches die Abgangsgruppe X trägt, stabilisieren können. Hierzu zählen bekanntermaßen Verbindungen, die wenigstens eine Abgangsgruppe X aufweisen, die an ein sekundäres oder tertiäres aliphatisches Kohlenstoffatom oder an ein allylisches oder benzylisches Kohlenstoffatom gebunden ist. Als Abgangsgruppen kommen dabei insbesondere Halogen, C₁-C₆-Alkoxy und C₁-C₆-Acyloxy in Betracht.

Halogen steht hier insbesondere für Chlor, Brom oder Jod und speziell für Chlor. C₁-C₆-Alkoxy kann sowohl linear als auch verzweigt sein, und steht beispielsweise für Methoxy, Ethoxy, n-Propoxy, Isopropoxy, n-Butoxy, Isobutoxy, n-Pentoxy oder n-Hexoxy. C₁-C₆-Alkylcarbonyloxy steht beispielsweise für Acetoxy, Propionyloxy, n-Butyroxy oder Isobutyroxy.

Bevorzugt sind solche Verbindungen der allgemeinen Formel I, worin die funktionelle Gruppe die allgemeine Formel FG 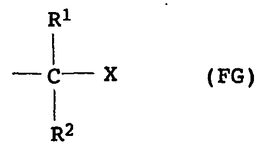 aufweist, worin
- X: ausgewählt ist unter Halogen, C₁-C₆-Alkoxy und C₁-C₆-Acyloxy,
- R¹: Wasserstoff oder Methyl bedeutet und
- R²: für Methyl steht, oder mit R¹ oder dem Molekülteil an den die funktionelle Gruppe FG gebunden ist, einen C₅-C₆-Cycloalkylring bildet, R² auch Wasserstoff bedeuten kann, wenn die funktionelle Gruppe FG an ein aromatisches oder olefinisch ungesättigtes C-Atom gebunden ist.

Die Verbindungen der allgemeinen Formel I weisen vorzugsweise eine, zwei, drei oder vier, insbesondere eine oder zwei funktionelle Gruppen FG auf. Bevorzugt steht X in Formel (FG) für ein Halogenatom, insbesondere für Chlor.

Bevorzugte Verbindungen I gehorchen beispielsweise den allgemeinen Formeln I-A bis I-D: 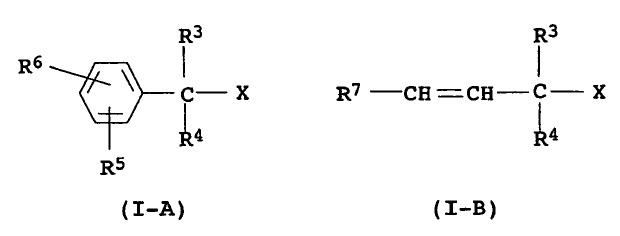 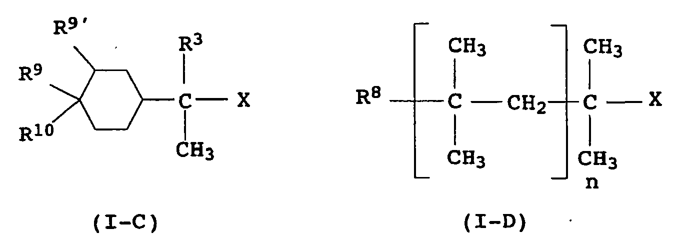 worin X die zuvor genannte Bedeutung hat,
- n: für 0, 1, 2, 3, 4 oder 5 steht,
- R³, R⁴ und R¹⁰: unabhängig voneinander für Wasserstoff oder Methyl stehen,
- R⁵, R⁶ und R⁷: unabhängig voneinander für Wasserstoff, C₁-C₄-Alkyl oder eine Gruppe CR³R⁴-X stehen, worin R³, R⁴ und X die zuvor genannten Bedeutungen haben und
- R⁸: für Wasserstoff, Methyl oder ein Gruppe X steht und
- R⁹ und R^{9'}: Wasserstoff oder eine Gruppe X bedeuten.

In den Formeln I-A bis I-D stehen R³ und R⁴ vorzugsweise beide für Methyl. In der Formel I-A steht R⁶ beispielsweise für eine Gruppe CR³R⁴-X, die in para-Position zur CR³R⁴X-Gruppe angeordnet ist, wenn R⁵ Wasserstoff bedeutet. Sie kann sich auch in der meta-Position befinden, wenn die Gruppe R⁵ für C₁-C₄-Alkyl oder eine Gruppe CR³R⁴-X steht. Bevorzugte Verbindungen I-A sind z.B. 2-Chlor-2-phenylpropan (Cumylchlorid) und 1,4-Bis(2-chlorpropyl-2)benzol (para-Dicumyldichlorid).

In Formel I-B steht R⁷ vorzugsweise für eine Gruppe CR³R⁴-X oder für Wasserstoff. Beispiele für Verbindungen der Formel I-B sind Allylchlorid, Methallylchlorid, 2-Chlor-2-methylbuten-2 sowie 2,5-Dichlor-2,5-dimethylhexen-3.

In den Verbindungen I-C steht R³ vorzugsweise für Methyl. R² steht vorzugsweise ebenfalls für Methyl. R⁹ steht vorzugsweise für eine Gruppe X, und insbesondere für Halogen, insbesondere, wenn R¹⁰ für Methyl steht. Beispiele für Verbindungen der allgemeinen Formel I-C sind 1,8-Dichlor-4-p-menthan (Limonendihydrochlorid), 1,8-Dibrom-4-p-menthan (Limonendihydrobromid), 1-(1-Chlorethyl) -3-chlorcyclohexan, 1-(1-Chlorethyl)-4-chlorcyclohexan, 1-(1-Bromethyl)-3-bromcyclohexan und 1-(1-Bromethyl)-4-bromcyclohexan.

Unter den Verbindungen der Formel I-D sind solche bevorzugt, in denen R⁸ für eine Methylgruppe steht. Bevorzugt sind außerdem Verbindungen der allgemeinen Formel I-D, in denen R⁸ für eine Gruppe x, und insbesondere ein Halogen-Atom, steht, wenn n > 0 ist.

Im Hinblick auf die Verwendung der nach dem erfindungsgemäßen Verfahren hergestellten Polyisobutene als Kraft- oder Schmierstoffadditive werden unter den Verbindungen I die Verbindungen der Formel I-D bevorzugt, und hierunter insbesondere solche, in denen X für ein Halogenatom steht. Vorzugsweise steht in der Formel I-D die Variable n für 1, 2, 3 oder 4, und insbesondere für 1 oder 2, oder für 0, wenn R⁸ eine Methylgruppe bedeutet. Für viele andere Zwecke, insbesondere bei der Herstellung mittel- und höhermolekularer Polymere z.B. oberhalb 2000, insbesondere oberhalb 3000 Dalton, werden die Verbindungen I-A bevorzugt.

In der Regel wird man im erfindungsgemäßen Verfahren die Verbindung I in einer Menge von wenigstens 10⁻⁶ mol pro mol Isobuten bzw. pro mol polymerisierbare Monomere einsetzen, um eine ausreichende Konzentration an Initiator-Komplexen zur Verfügung zu stellen. In der Regel wird die Menge der Verbindungen I einen Wert von 1 mol je mol zu polymerisierenden Monomeren (bzw. Isobuten) nicht überschreiten. Diese sowie die im Folgenden zu Mengen der Verbindung I gemachten Angaben sind, sofern nichts anderes angegeben ist, stets auf die Anzahl der funktionellen Gruppen (FG) in der Verbindung I bezogen. Vorzugsweise setzt man die Verbindungen der Formel I in einer Menge von 10⁻⁵ bis 10⁻¹ mol, insbesondere 10⁻⁴ bis 5 x 10⁻² mol, bezogen auf die funktionellen Gruppen (FG) der Verbindung I, je mol Isobuten, bzw. polymerisierbare Monomere, ein. Hierbei ist zu berücksichtigen, dass das erreichte Molekulargewicht des nach dem erfindungsgemäßen Verfahren hergestellten Polyisobutens von der Menge an Verbindung I dergestalt abhängt, dass mit zunehmender Konzentration an Verbindung I das Molekulargewicht des Polyisobutens abnimmt.

Als Lewis-Säure kommen grundsätzlich kovalente Metallhalogenide und Halbmetallhalogenide, die in der Regel eine Elektronenpaarlücke aufweisen, in Betracht. Derartige Verbindungen sind dem Fachmann bekannt, beispielsweise aus Kennedy et al., loc. cit., und sind in der Regel ausgewählt unter kovalenten Metall-Halogen-Verbindungen des Titans, des Zinns, des Aluminiums, des Vanadiums oder des Eisens, sowie den Halogeniden des Bors. Bevorzugt sind die Chloride, und im Falle des Aluminiums auch die Monoalkylaluminiumchloride und die Dialkylaluminiumchloride. Beispiele für bevorzugte Lewis-Säuren sind Titan(IV)chlorid, Bortrichlorid, Zinn(IV)chlorid, Aluminiumtrichlorid, Vanadium(V)chlorid, Eisen(III)chlorid, C₁-C₆-Alkyl-AlCl₂ und (C₁-C₆-Alkyl)₂AlCl. Besonders bevorzugte Lewis-Säuren sind Titan(IV)chlorid und Bortrichlorid.

Die Lewis-Säure wird im erfindungsgemäßen Verfahren naturgemäß in einer Menge eingesetzt, die zur Bildung des Initiatorkomplexes ausreicht. Dies ist in der Regel bereits bei geringen Konzentrationen der Lewis-Säure im Reaktionsmedium gewährleistet. Vorzugsweise beträgt das Molverhältnis von Lewis-Säure zu Verbindung I 20:1 bis 1:20, insbesondere 10:1 bis 1:10. Die Konzentration der Lewis-Säure im Reaktionsmedium liegt in der Regel im Bereich von 10⁻³ bis 1 mol/l, vorzugsweise im Bereich von 5 × 10⁻³ bis 0,3 mol/l, insbesondere im Bereich von 0,01 bis 0,2 mol/l.

Die Konzentration des zu polymerisierenden Isobutens kann über weite Bereiche variiert werden, wobei mit zunehmendem Molekulargewicht und/oder zunehmender Konzentration an Produkt die Viskosität der Reaktormischung steigt. Aus diesem Grund wird üblicherweise die Isobuten-Konzentration in dem einzuspeisenden EduktStrom im Bereich von 1 Gew.-% bis 60 Gew.-%, vorzugsweise 2 bis 40 Gew.-% und insbesondere 3 bis 30 Gew.-% liegen.

Weiterhin hat es sich bewährt, die Polymerisation des Isobutens in Gegenwart einer Donor-Verbindung durchzuführen. Als Donor-Verbindungen kommen grundsätzlich alle aprotischen organischen Verbindungen in Betracht, die ein an einem Stickstoff, Sauerstoff oder Schwefelatom befindliches, freies Elektronenpaar aufweisen. Das freie Elektronenpaar wirkt als Nucleophil mit der Lewis-Säure und modifiziert so deren katalytische Wirkung. Bevorzugte Donorverbindungen sind ausgewählt unter Pyridinen wie Pyridin, 2,6-Dimethylpyridin, 2,6-Diisopropylpyridin, sowie 2,6-Di-tert-butylpyridin, N,N-Dialkylamiden von aliphatischen oder aromatischen Carbonsäuren wie N,N-Dimethylacetamid, N-Alkyllactame wie N-Methylpyrrolidon, Dialkylethern wie Diethylether und Diisopropylether, cyclische Ether, wie Tetrahydrofuran, Trialkylaminen wie Triethylamin, C₁-C₄-Alkylester aliphatischer C₁-C₆-Carbonsäuren wie Ethylacetat, Dialkylthioether oder Alkylarylthioether, wie Methylphenylsulfid, Dialkylsulfoxide, wie Dimethylsulfoxid, Alkylnitrile wie Acetonitril und Propionitril, Trialkylphosphine oder Triarylphosphine, wie Trimethylphosphin, Triethylphosphin, Tri-n-butylphosphin und Triphenylphosphin und nicht polymerisierbaren, aprotischen siliziumorganischen Verbindungen, die wenigstens einen über Sauerstoff gebundenen organischen Rest aufweisen. Dieser Rest weist in der Regel 1 bis 20 Kohlenstoffatome auf. Beispiele für derartige Reste sind Alkyloxy, Cycloalkyloxy, Aryloxy, Arylalkyloxy und Acyloxy (Alkylcarbonyloxy).

Unter den vorgenannten Donoren sind Pyridin und sterisch gehinderte Pyridin-Derivate sowie insbesondere siliziumorganische Verbindungen bevorzugt. In einer besonders bevorzugten Ausführungsform setzt man als Donor wenigstens eine siliziumorganische Verbindung II ein.

Sterisch gehinderte Pyridine sind solche die zumindest in der 2- und 6-Position des Pyridinringes sterisch anspruchsvolle Alkylgruppen aufweisen, z. B. 2,6-Düsopropylpyridin und 2,6-Di-tert.-butylpyridin.

Der Donor und insbesondere die siliziumorganische Verbindung II wird vorzugsweise in einer Menge eingesetzt, dass das Molverhältnis von Donormolekülen bzw. von Siliziumatomen in der siliziumorganischen Verbindung II zu den Metallatomen bzw. den Halbmetallatomen in der Lewis-Säure im Bereich von 0,05:1 bis 50:1, vorzugsweise im Bereich von 0,1:1 bis 10:1, und besonders bevorzugt im Bereich von 0,1 bis 2:1, liegt. Ganz besonders bevorzugt verwendet man den Donor bzw. die siliziumorganische Verbindung II im molaren Unterschuss (gerechnet als das Verhältnis der Siliziumatome zu den (Halb)Metallatomen).

Unter Alkyl versteht man hier und im Folgenden einen linearen oder verzweigten gesättigten Kohlenwasserstoffrest mit in der Regel 1 bis 20 C-Atomen, und vorzugsweise 1 bis 10 C-Atomen, wie Methyl, Ethyl, n-Propyl, Isopropyl, n-Butyl, Isobutyl, tert.-Butyl, 2-Butyl, n-Pentyl, 2-Methylbutyl-1, 2-Methylpentyl-1, 2-Ethylbutyl-1, n-Hexyl, 2-Hexyl, 2-Methylhexyl-1, 2-Ethylhexyl-1, n-Heptyl, n-Octyl, Isooctyl, n-Decyl, und vergleichbare Reste.

Aryl steht für einen aromatischen Kohlenwasserstoffrest mit in der Regel 6 bis 20 C-Atomen, wie Phenyl, Naphthyl und vergleichbare Gruppen, die eine oder mehrere C₁-C₁₀-Alkylgruppen als Substituenten aufweisen können, z.B. Tolyl, Isopropylphenyl, Xylyl oder tert.-Butylphenyl.

Cycloalkyl bedeutet hier einen in der Regel 5-, 6- oder 7-gliedrigen, gesättigten Carbocyclus, der gegebenenfalls eine oder mehrere C₁-C₁₀-Alkylgruppen als Substituenten aufweisen kann.

Arylalkyl steht für einen Alkylrest mit in der Regel 1 bis 10 C-Atomen, und vorzugsweise 1 bis 4 C-Atomen, der durch einen Arylrest, wie vorstehend definiert, substituiert ist, z.B. für Benzyl oder 2-Phenylethyl.

Alkyloxy steht für über ein Sauerstoffatom gebundenes Alkyl. Dementsprechend stehen Aryloxy, Cycloalkyloxy und Arylalkyloxy für über ein Sauerstoffatom gebundenes Aryl, Cycloalkyl bzw. Arylalkyl.

Acyloxy steht für einen über Sauerstoff gebundenen Alkylcarbonyl-Rest, der vorzugsweise 1 bis 6 C-Atome im Alkylteil aufweist, z.B. für Acetyloxy, Propionyloxy, Butyroxy etc.

Die siliziumorganischen Verbindungen II können ein oder mehrere, z.B. 2 oder 3, Siliziumatome mit wenigstens einem über Sauerstoff gebundenen organischen Rest aufweisen. Bevorzugt sind solche siliziumorganischen Verbindungen II, die einen, zwei oder drei, und insbesondere 2 oder 3 über Sauerstoff gebundene organische Reste je Siliziumatom aufweisen.

Bevorzugte siliziumorganische Verbindungen sind solche, die die allgemeine Formel II aufweisen:

R^{a}ₙSi(OR_{b})₄₋ₙ

worin n für 1, 2 oder 3 steht,
- R^{a}: gleich oder verschieden sein können und unabhängig voneinander C₁-C₂₀-Alkyl, C₅-C₇-Cycloalkyl, Aryl oder Aryl-C₁-C₄-alkyl bedeuten, wobei die drei letztgenannten Reste auch eine oder mehrere C₁-C₁₀-Alkylgruppen als Substituenten aufweisen können, und
- R^{b}: gleich oder verschieden sind und C₁-C₂₀-Alkyl bedeuten oder für n = 1 oder 2 zwei verschiedene Reste R^{b} auch eine 2- oder 3-gliedrige Alkylen-Einheit bilden können.

In Formel II steht die Variable n vorzugsweise für 1 oder 2. Die Variable R^{a} bedeutet vorzugsweise eine C₁-C₈-Alkylgruppe, und insbesondere eine verzweigte oder über ein sekundäres C-Atom gebundene Alkylgruppe, wie Isopropyl, Isobutyl, 2-Butyl, oder eine 5-, 6- oder 7-gliedrige Cycloalkylgruppe. Die Variable R² steht vorzugsweise für eine C₁-C₄-Alkylgruppe.

Beispiele für derartige bevorzugte Verbindungen sind Dimethoxydiisopropylsilan, Dimethoxyisobutylisopropylsilan, Dimethoxydiisobutylsilan, Dimethoxydicyclopentylsilan, Dimethoxyisobutyl-2-butylsilan, Diethoxyisobutylisopropylsilan, Triethoxytoluylsilan und Triethoxybenzylsilan.

Nach dem erfindungsgemäßen Verfahren können sowohl Isobuten als solches als auch Monomermischungen des Isobutens mit olefinisch ungesättigten Monomeren, welche bekanntermaßen mit Isobuten unter kationischen Polymerisationsbedingungen copolymerisierbar sind, umgesetzt werden. Das erfindungsgemäße Verfahren ist außerdem zur Blockcopolymerisation von Isobuten mit unter kationischen Polymerisationsbedingungen polymerisierbaren ethylenisch ungesättigten Comonomeren geeignet. Sofern Monomermischungen des Isobutens mit geeigneten Comonomeren polymerisiert werden sollen, enthält die Monomermischung vorzugsweise mehr als 80 Gew.-%, insbesondere mehr als 90 Gew.-%, und, besonders bevorzugt, mehr als 95 Gew.-% Isobuten, und weniger als 20 Gew.-%, vorzugsweise weniger als 10 Gew.-%, und insbesondere weniger als 5 Gew.-%, Comonomere.

Als copolymerisierbare Monomere kommen Vinylaromaten wie Styrol und -Methylstyrol, C₁-C₄-Alkylstyrole wie 2-, 3- und 4-Methylstyrol, sowie 4-tert.-Butylstyrol, Isoolefine mit 5 bis 10 C-Atomen wie 2-Methylbuten-1, 2-Methylpenten-1, 2-Methylhexen-1, 2-Ethylpenten-1, 2-Ethylhexen-1 und 2-Propylhepten-1. Als Comonomere kommen weiterhin Olefine in Betracht, die eine Silylgruppe aufweisen wie 1-Trimethoxysilylethen, 1-(Trimethoxysilyl)propen, 1-(Trimethoxysilyl)-2-methylpropen-2, 1-[Tri(methoxyethoxy)silyl]ethen, 1-[Tri(methoxyethoxy)silyl]propen, und 1-[Tri(methoxyethoxy)silyl]-2-methylpropen-2.

Bevorzugte Ausführungsformen des erfindungsgemäßen Verfahrens betreffen die Homopolymerisation von Isobuten bzw. isobutenhaltigen Einsatzstoffen, sowie die Blockcopolymerisation von Isobuten mit vinylaromatischen Monomeren. Hierbei enthalten die Isobuten-Einsatzstoffe in der Regel weniger als 5 Gew.-%, bezogen auf die Gesamtmenge des isobutenhaltigen Einsatzstoffes, an copolymerisierbaren Monomeren. Dies gilt für die Blockcopolymerisation in analoger Weise auch für die vinylaromatischen Monomere.

Als Isobuten-Einsatzstoffe für das erfindungsgemäße Verfahren eignen sich sowohl Isobuten selber als auch isobutenhaltige C₄-Kohlenwasserstoffströme, beispielsweise C₄-Raffinate, C₄-Schnitte aus der Isobuten-Dehydrierung, C₄-Schnitte aus Steamcrackern, FCC-Crackern (FCC: Fluid Catalysed Cracking), sofern sie weitgehend von darin enthaltenen 1,3-Butadien befreit sind. Erfindungsgemäß geeignete C₄-Kohlenwasserstoffströme enthalten in der Regel weniger als 500 ppm, vorzugsweise weniger als 200 ppm Butadien. Bei Einsatz von C₄-Schnitten als Einsatzmaterial übernehmen die von Isobuten verschiedenen Kohlenwasserstoffe die Rolle eines inerten Lösungsmittels.

Als Lösungsmittel kommen alle niedermolekularen, organischen Verbindungen in Betracht, die von den Verbindungen I und II sowie den polymerisierbaren Monomeren, insbesondere Isobuten, verschieden sind, die keine abstrahierbaren Protonen aufweisen und die unter den Polymerisationsbedingungen, gegebenenfalls als Mischung untereinander flüssig sind. Bevorzugte Lösungsmittel sind Kohlenwasserstoffe, z.B. acyclische Alkane mit 2 bis 8 und vorzugsweise 3 bis 6 Kohlenstoffatomen wie Ethan, Iso- und n-Propan, n-Butan und seine Isomeren, n-Pentan und seine Isomeren, n-Hexan und seine Isomeren sowie n-Heptan und seine Isomeren, cyclische Alkane mit 5 bis 8 C-Atomen wie Cyclopentan, Methylcyclopentan, Cyclohexan, Methylcyclohexan, Cycloheptan, acyclische Alkene mit vorzugsweise 2 bis 8 Kohlenstoffatomen wie Ethen, Iso- und n-Propen, n-Buten, n-Penten, n-Hexen und n-Hepten, cyclische Olefine wie Cyclopenten, Cyclohexen und Cyclohepten, aromatische Kohlenwasserstoffe wie Toluol, Xylol, Ethylbenzol, sowie Halogenkohlenwasserstoffe, z.B. halogenierte Alkane mit 1 bis 5 Kohlenstoffatomen und 1, 2, 3, 4, 5 oder 6 Halogenatomen, ausgewählt unter Fluor oder insbesondere Chlor wie Methylchlorid, Dichlormethan, Trichlormethan, Ethylchlorid, 1,2-Dichlorethan und 1,1,1-Trichlorethan sowie Chloroform und Halogenaromaten wie Chlorbenzol.

Geeignet sind nicht nur die Lösungsmittel als solche sondern auch Mischungen dieser Lösungsmittel. Mischungen sind insbesondere dann bevorzugt, wenn das Lösungsmittel einen Schmelzpunkt oberhalb der gewünschten Polymerisationstemperatur aufweist.

Besonders bevorzugt sind Lösungsmittel und Lösungsmittelgemische, die wenigstens einen Kohlenwasserstoff umfassen. Hierunter besonders bevorzugt sind Lösungsmittelgemische, die wenigstens einen Kohlenwasserstoff und wenigstens ein Halogenalkan umfassen. Hierunter besonders bevorzugt sind Lösungsmittelgemische, die wenigstens ein acyclisches Alkan mit 4 bis 6 C-Atomen, insbesondere Hexan, und wenigstens ein Chloralkan, insbesondere Methylchlorid oder Methylenchlorid, umfassen. Ebenfalls besonders bevorzugt sind Lösungsmittelgemische, die wenigstens einen aromatischen Kohlenwasserstoff, insbesondere Toluol, und wenigstens ein Chloralkan, insbesondere Methylchlorid oder Methylenchlorid, umfassen. Das Volumenverhältnis von Kohlenwasserstoff zu halogeniertem Kohlenwasserstoff liegt dabei vorzugsweise im Bereich von 1:10 bis 10:1, insbesondere im Bereich von 4:1 bis 1:4. Selbstverständlich umfassen die Chloralkane in diesen Mischungen keine Verbindungen, worin Chloratome an sekundären oder tertiären Kohlenstoffatomen sitzen. Ebenfalls besonders bevorzugt sind ternäre Lösungsmittelgemische, die wenigstens einen aromatischen Kohlenwasserstoff, insbesondere Toluol, wenigstens ein acyclisches Alkan mit 4 bis 6 C-Atomen, insbesondere Hexan, und wenigstens ein Chloralkan, insbesondere Methylchlorid oder Methylenchlorid, umfassen. Das Volumenverhältnis der drei vorgenannten Komponenten wird dann so gewählt, dass das Verhältnis von Alkan zu Aromat im Bereich von 1:10 bis 10:1 liegt und das Volumenverhältnis von Alkan + Aromat zu Halogenalkan im Bereich von 10:1 bis 1:1 liegt. Führt man die Polymerisation unter Siedekühlung durch, dann enthalten die Lösungsmittel bzw. die Lösungsmittelgemische noch bis zu 50 Vol.-%, z.B. 5 bis 50 Vol.-%, vorzugsweise 10 bis 30 Vol.-% einer leicht verdampfbaren Lösungsmittel-Komponente, z.B. Ethylen.

Es versteht sich von selbst, dass man die Polymerisation unter weitgehend aprotischen, insbesondere unter wasserfreien, Reaktionsbedingungen durchführt. Unter aprotischen beziehungsweise wasserfreien Reaktionsbedingungen versteht man, dass der Wassergehalt (bzw. der Gehalt an protischen Verunreinigungen) im Reaktionsgemisch weniger als 50 ppm, und insbesondere weniger als 5 ppm beträgt. In der Regel wird man daher die Einsatzstoffe vor ihrer Verwendung physikalisch und/oder durch chemische Maßnahmen trocknen. Beispielsweise kann man die als Lösungsmittel bevorzugt eingesetzten aliphatischen oder cycloaliphatischen Kohlenwasserstoffe nach üblicher Vorreinigung und Vortrocknung mit einer metallorganischen Verbindung, beispielsweise einer Organolithium-, Organomagnesium- oder Organoaluminium-Verbindung, in einer zur Entfernung von Wasserspuren aus dem Lösungsmittel ausreichenden Menge versetzen. Das so behandelte Lösungsmittel wird dann direkt in das Reaktionsgefäß einkondensiert. In ähnlicher Weise kann man auch mit den α-Olefinen, den aromatischen Kohlenwasserstoffen und den zu polymerisierenden Monomeren, insbesondere dem Isobuten, verfahren.

Die Vorreinigung bzw. Vortrocknung der Lösungsmittel und des Isobutens erfolgt in üblicher Weise, vorzugsweise durch Behandlung mit festen Trocknungsmitteln wie Molekularsieben oder vorgetrockneten Oxiden wie Calciumoxid oder Bariumoxid. In analoger weise kann man die Einsatzstoffe trocknen, für die eine Behandlung mit Metallalkylen nicht in Betracht kommt, beispielsweise die als Lösungsmittel verwendeten Alkylhalogenide, sowie die Verbindungen I und II.

Die Polymerisation des Isobutens bzw. der isobutenhaltigen Monomermischung erfolgt grundsätzlich spontan beim Vermischen des erfindungsgemäß zur Anwendungen kommenden Initiatorsystems mit dem Isobuten bzw. der isobutenhaltigen Monomermischung in dem inerten organischen Lösungsmittel bei der gewünschten Reaktionstemperatur. Man führt daher in der Regel die Einsatzstoffe, d.h. die zu polymerisierenden Monomere, das Lösungsmittel sowie das Initiatorsystem der Polymerisationsreaktion kontinuierlich in den gewünschten Mengenverhältnissen dem Wendelrohrreaktor zu und entnimmt kontinuierlich Reaktionsprodukt, so dass sich im Reaktor mehr oder weniger stationäre Polymerisationsbedingungen einstellen. Die Komponenten des Initiatorsystems können dabei sowohl getrennt voneinander als auch gemeinsam, vorzugsweise verdünnt im Lösungsmittel zugeführt werden. Beispielsweise kann die Zugabe der im Lösungsmittel verdünnten Komponenten des Initiatorsystems über Mehrstoffdüsen erfolgen, um eine gute Durchmischung der Komponenten zu erreichen. Selbstverständlich kann man auch ein präformiertes Initiatorsystem, d.h. eine Mischung aus Lewis-Säure und Verbindung I und gegebenfalls Donor zugeben. Das zu polymerisierende Isobuten bzw. die isobutenhaltige Monomergemische können als solche, verdünnt mit einem Lösungsmittel oder als isobutenhaltiger Kohlenwasserstoffstrom zugeführt werden. Vorzugsweise werden das Initiatorsystem und der zu polymerisierende Isobutenhaltige Produktstrom getrennt voneinander dem Wendelrohrreaktor zugeführt.

Wie bereits erwähnt, wird das erfindungsgemässe Verfahren vorzugsweise in einem Wendelrohrreaktor offener Bauart durchgeführt. Hierbei kann man so vorgehen, dass man alle Komponenten gleichzeitig, vorzugsweise über ein oder mehrere Mischvorrichtungen an einem Ende des Reaktionsrohres in den Reaktor einspeist. Selbstverständlich kann man auch einen Teil der Komponenten stromabwärts von diesem Einspeisungsort in den Reaktor einspeisen, vorzugsweise ebenfalls über eine zum Mischen geeignete Vorrichtung. Häufig geht man so vor, daß man die Lewis-Säure und/oder die Initiatorverbindung stromabwärts von der Zufuhr der Monomere und des Lösungsmittels in den Reaktor einspeist. Hierbei wird man häufig zunächst durch Vermischen von Lösungsmittel und Monomeren einen flüssigen Monomerstrom herstellen, der gegebenenfalls bereits die Donorverbindung enthält. Unter Kühlen wird dann nacheinander die Lewis-Säure und die Verbindung I in den Monomerstrom eingespeist, wobei das Einspeisen vorzugsweise über zum Mischen von Flüssigkeiten geeignete Vorrichtungen erfolgt. Spätestens mit dem Einspeisen der letzten Komponente wird der Flüssigkeitsstrom in den Wendelrohrreaktor eingespeist, wobei das Einspeisen der letzten Komponente auch im Wendelrohrreaktor erfolgen kann, sodaß die eigentliche Polymerisation im Wendelrohrreaktor stattfindet. Vorzugsweise wird zunächst Verbindung I und dann die Lewis-Säure in den Monomerstrom eingespeist.

In besonders einfacher Weise kann man das erfindungsgemäße Verfahren durchführen, indem man zunächst aus den Verbindungen I, ggf. der Donorverbindung, dem Lösungsmittel und den Monomeren einen Monomerstrom herstellt, der gekühlt wird und anschließend über eine Mischvorrichtung in den Wendelrohrreaktor eingespeist wird, wobei man über diese Mischvorrichtung gleichzeitig die Lewis-Säure in den Reaktor bzw. in den Monomerstrom einspeist.

Lewis-Säure, Donorverbindung und Verbindung I werden vorzugsweise als verdünnte Lösungen in dem zur Polymerisation verwendeten Lösungsmittel oder in einem Lösungsmittelbestandteil davon gehandhabt. bzw. dosiert. Die Konzentration dieser Verbindungen in diesen Lösungen beträgt dann vorzugsweise 0,01 bis 5 mol/l, insbesondere 0,05 bis 1 Mol/l.

In der Regel wird man das erfindungsgemäße Verfahren bei Temperaturen unterhalb 0°C, z.B. im Bereich von 0 bis 140°C, vorzugsweise im Bereich von -30 bis -120°C, und besonders bevorzugt im Bereich von -40 bis -110°C durchführen. Der Reaktionsdruck ist von untergeordneter Bedeutung und richtet sich in bekannter Weise nach den Reaktionsbedingungen.

Die mittlere Verweilzeit der Reaktanden (Isobuten-haltiges Edukt, Initiator und Lösungsmittel) im Reaktor liegt in der Regel im Bereich von 1 min bis 1 h, vorzugsweise im Bereich von 1,5 min bis 45 min und insbesondere im Bereich von 2 min bis 30 min.

Vorzugsweise wird man die Verweilzeit so wählen, daß unter den Reaktionsbedingungen ein Umsatz der Monomere von wenigstens 50 %, insbesondere wenigstens 80 % gewährleistet ist. Selbstverständlich kann man die Polymerisation auch mit geringeren Umsätzen durchführen. In der Regel wird man aus wirtschaftlichen Gründen nicht umgesetzte Monomere zurückgewinnen und dem erfindungsgemäßen Verfahren wieder zuführen.

Die Abführung der Reaktionswärme erfolgt in üblicher Weise, beispielsweise durch Wandkühlung und/oder unter Ausnutzung einer Siedekühlung. Hier hat sich insbesondere die Verwendung von Ethen und/oder Mischungen von Ethen mit den oben als bevorzugt genannten Lösungsmitteln bewährt.

Zur Gewinnung der Isobutene aus dem Reaktionsgemisch wird dieses im Anschluß an die Polymerisation in der für kationische Polymerisationsreaktionen üblichen Weise deaktiviert, vorzugsweise durch Zugabe einer protischen Verbindung, insbesondere durch Zugabe von Alkoholen wie Methanol, Ethanol, n-Propanol, Isopropanol, n-Butanol, Isobutanol, sec.-Butanol oder tert.-Butanol, oder deren Mischungen mit Wasser. Vorzugsweise werden die zur Deaktivierung verwendeten Substanzen in einem Verdünnungsmittel, beispielsweise einem der sogenannten Lösungsmittel, eingesetzt, um eine unerwünschte Viskositätssteigerung zu vermeiden. Im Übrigen sei auch hier auf den eingangs zitierten Stand der Technik zur Polymerisation von Bortrifluorid mit Isobuten verwiesen, dessen Maßnahmen zur Aufarbeitung in analoger Weise auf das erfindungsgemäße Verfahren übertragen werden können.

In einer weiteren Ausführungsform der Erfindung wird die Polymerisation durch Zugabe einer Trialkylallylsilanverbindung, z.B. durch Zugabe von Trimethylallylsilan ((CH₃)₃Si-CH₂-CH=CH₂), abgebrochen. Derartige Verbindungen werden üblicherweise in Mengen von 0,3 bis 3 mol, vorzugsweise 0,5 bis 1,5 mol je mol funktionelle Gruppen FG eingesetzt. Die Verwendung der Allylsilane führt zum Abbruch der Polymerisation unter Einführung einer Propenyl-Gruppe am Polymerkettenende. Wegen weiterer Details zu dieser Reaktion sei an dieser Stelle auf die EP-A 713 883 verwiesen.

Vorzugsweise wird das zur Deaktivierung verwendete Mittel oder dessen Mischung mit einem inerten Lösungsmittel vor der Deaktivierung auf Polymerisationstemperatur abgekühlt, um unerwünschte Nebenreaktionen zu vermeiden.

Anschließend wird das Lösungsmittel in geeigneten Aggregaten wie Rotations-, Fallfilm- oder Dünnschichtverdampfern oder mittels Flash-Verdampfung (hierunter versteht man die Entspannung der Reaktionslösung hinter einem Wärmetauscher in Rohrleitungen oder über eine Loch- bzw. Düsenplatte) entfernt. Vorzugsweise legt man zur Entfernung des Lösungsmittels einen verringerten Druck an, z.B. im Bereich von 0,1 bis 800 mbar, insbesondere im Bereich von 1 bis 100 mbar. Sumpftemperaturen von 50° bis 250°C, und insbesondere 150 bis 220°C, sind bevorzugt.

Das erfindungsgemäße Verfahren ist insbesondere zur Herstellung von Polyisobutenen geeignet, d.h. Polymeren, die zu wenigstens 80%, vorzugsweise zu wenigstens 90%, aus einpolymerisiertem Isobuten aufgebaut sind. Durch das erfindungsgemäße Verfahren sind Polyisobutene mit Molekulargewichten (zahlenmittleres Molekulargewicht Mₙ) im Bereich von 400 bis 400000 Dalton, vorzugsweise im Bereich von 500 bis 200000 Dalton, und besonders bevorzugt im Bereich von 700 bis 100000 Dalton, zugänglich. Bevorzugt ist das Verfahren zur Herstellung von Polyisobutenen mit zahlenmittleren Molekulargewichten oberhalb 2000, insbesondere oberhalb 3000 Dalton geeignet. Das erhaltene Molekulargewicht kann der Fachmann in einfacher Weise durch Variation der Konzentration an eingesetzter Verbindung I variieren, wobei eine hohe Konzentration an Verbindung I zu Polymeren mit einem niedrigen Molekulargewicht führt, und eine niedrige Konzentration an Verbindung I zu Polymeren mit höheren Molekulargewichten führt. Außerdem weisen die nach dem erfindungsgemäßen Verfahren erhaltenen Polymere funktionelle Endgruppen, beispielsweise Halogenatome oder olefinisch ungesättigte Doppelbindungen auf, die für weitere Funktionalisierungsmaßnahmen genutzt werden können. Dies ist insbesondere für die Herstellung von Kraftstoff- und Schmierstoffadditiven von Interesse, die in der Regel aus einem hydrophoben Kohlenwasserstoffrest, beispielsweise einer Polyisobutenylgruppe, und einem hydrophilen Molekülteil aufgebaut sind.

Die nach dem erfindungsgemäßen Verfahren hergestellten Additive weisen überraschenderweise eine enge Molekulargewichtsverteilung auf. Die Dispersität D (Quotient des gewichtsmittleren Molekulargewichtes M_{w}, geteilt durch das zahlenmittlere Molekulargewicht Mₙ), der nach dem erfindungsgemäßen Verfahren erhaltenen Polymere liegt vorzugsweise unterhalb 1,4, insbesondere unterhalb 1,35, und besonders bevorzugt im Bereich von 1,05 bis 1,3. Durch Verwendung von siliziumorganischen Donoren II gelingt es sogar, Polymere mit einer molekularen Uneinheitlichkeit im Bereich von 1,05 bis 1,25 herzustellen.

Alle Angaben zu Molekulargewichten beziehen sich auf Werte, wie sie mittels Gelpermeationschromatographie (GPC) ermittelt wurden. Die Gelpermeationschromatographie erfolgte mit THF als Fließmittel und CS₂ als Referenz an zwei hintereinander geschalteten Säulen (L 300 mm, d 7,8 mm), wobei die erste Säule mit Styragel HR5 (Molekulargewichtsbereich 50000 bis 4 x 10⁶) und die zweite Säule mit Styragel HR3 (Molekulargewichtsbereich 200 bis 30000) der Fa. Waters gepackt waren. Die Detektion erfolgte über ein Differentialrefraktometer. Als Standards zur Bestimmung des Isobutenblocks wurden käufliche Polyisobutenstandards im Molmassenbereich 224 bis 1000000 der Fa. Polymer-Standards Service, Mainz, Deutschland, eingesetzt. Bei der Bestimmung der Blockcopolymere wurde zusätzlich ein Polystyrol-Eichfile und ein UV-Detektor herangezogen.

Die folgenden Beispiele sollen die Erfindung verdeutlichen, ohne sie jedoch einzuschränken.
I. Analytik
   Die Bestimmung des Molekulargewichts erfolgte mittels Gelpermeationschromatographie (GPC) gegen Polyisobutenstandards in der oben beschriebenen Weise.
II. Allgemeine Herstellungsvorschriften für das erfindungsgemässe Polymerisationsverfahren und die nicht erfindungsgemässen Vergleichsuntersuchungen:
II.1 Reaktoren:
   Als Wendelrohrreaktor diente ein 20 m langer Polytetrafluorethlyen-Schlauch mit einem Rohrquerschnitt (Innendurchmesser) von 3 mm, der analog der in den Abbildungen 6 und 7 gezeigten Konfiguration um 9 Trägerrohre mit einem Aussendurchmesser von 25 mm, die auf den Ecken eines gleichseitigen 9-Ecks mit einem Radius von 70 mm angeordnet sind, gewickelt worden war. Der Krümmungsradius betrug 18 mm. Das Verhältnis von Krümmungsradius zu Rohrdurchmesser betrug demnach 6 und das Reaktorvolumen 0,14 1. Der Reaktor wies an dem einen Ende eine Mischvorrichtung, bestehend aus einem statischen Mischer und einer Zuleitung in Form eines Y- oder T-Stücks, auf. Das andere Ende war er mit einem ungekühlten Vorlagegefäss mit Rührer verbunden, das eine 20 vol.-%ige Lösung von Isopropanol in Wasser enthielt (Temperatur 10°C). Der Reaktor wurde in einem Kältebad auf die gewünschte Reaktionstemperatur gekühlt.
   Konventioneller Rohreaktor: Als Rohrreaktor diente auch hier ein 20 m langer Polytetrafluorethlyen-Schlauch mit einem Rohrquerschnitt (Innendurchmesser) von 3 mm, der jedoch anders als der Wendelrohrreaktor kreisförmig in 50 Schlaufen mit einem Schlaufendurchmesser von etwa 120 mm gewickelt war und der im übrigen wie der Wendelrohrreaktor ausgerüstet war. Die Aufarbeitung erfolgte wie beim Wendelrohrreaktor. Batch Reaktor: In einem 2 1-Vierhalskolben mit Rührer und Trockeneiskühlung wurden zwei Tropftrichter mit Kühlvorrichtung von je 1 1 platziert. Beide Tropftrichter wiesen eine Schüttung aus trockenem Molekularsieb 3Å über Glaswolle auf.
2. Durchführung der kontinuierlichen Versuche:
   Über einen 1. Mischer wurden Isobuten, das jeweilige Lösungsmittel, die Donorverbindung und die Verbindung I zu einem Eduktstrom vermischt und auf die gewünschte Temperatur vorgekühlt. Die Zufuhrrate von Isobuten betrug 2,1 mol/h. Die Zufuhrrate der Donorverbindung und der Verbindung I ist in Tabelle 1 angegeben. Die Zugabe der Donorverbindung und der Verbindung I erfolgte in Form 0,2 M Lösungen in Toluol. Dieser gekühlte Eduktstrom wurde über das weitere Mischelement, welches eine Zuleitung für die Einspeisung der Lewis-Säure aufwies, in den Reaktor eingespeist. Über diese Zuleitung wurde die Lewis-Säure in Form einer 0,2 M Lösung in Toluol zugeführt. Als Lewis-Säure wurde in allen Fällen Titantetrachlorid eingesetzt. Die Zugaberate der Lewis-Säure ist in Tabelle 1 angegeben.
   Die Strömungsgeschwindigkeit im Reaktor wurde durch Regulierung des Lösungsmittelstroms auf eine Geschwindigkeit von 2,2 cm/sec bis etwa 8 cm/sec eingestellt. Dies entspricht einer mittleren Verweilzeit der Reaktanden im Bereich von 4 bis 15 min.
   Nach einer Laufzeit von 30 bis 90 min wurde die in der Vorlage angefallene organische Mischung entnommen und dreimal mit je 200 ml Wasser gewaschen. Anschließend engte man die organische Phase ein und trocknete bei 200°C bis zu einem Endvakuum von 2 mbar.
   Die Ergebnisse der Versuche sind in Tabelle 1 angegeben.
3. Durchführung der Batch-Versuche:
   In dem einen Tropftrichter werden 420 ml eines Lösungsmittelgemisches 20 min bei -78°C getrocknet. Das Lösungsmittel wird dann in den Reaktionskolben, der auf die gewünschte Temperatur vortemperiert war, dosiert. 2,1 mol Isobuten wurden in den anderen, gekühlten Tropftrichter einkondensiert. Anschließend gab man innerhalb 25 min die Gesamtmenge an Isobuten in den Reaktionskolben. Unter Beibehaltung der Temperatur gab man dann nacheinander über ein Septum den Donor, die Verbindung I, und dann Titantetrachlorid unter starkem Rühren zu. Nach 3 Stunden gab man bei -70°C 1 mol Isopropanol zu, erwärmte auf Raumtemperatur und wusch dann die Reaktionslösung dreimal mit je 200 ml Wasser. Anschließend engte man die Reaktionslösung ein und trocknete bei 200°C bis zu einem Endvakuum von 2 mbar. Die Einsatzmengen sind in Tabelle 1 angegeben. Die Eigenschaften des Polymeren sind in Tabelle 2 zusammengestellt.

**Tabelle 1:**

| Versuch | Methode | T | TiCl₄ | Verbindung I²⁾ | | Donor³⁾ | | V⁴⁾ [cm/sec] | Lösungsmittel⁵⁾ |
|---|---|---|---|---|---|---|---|---|---|
| | | [°C] | [mmol/h]¹⁾ | Typ [mmol/h] | | Typ [mmol/h] | | | |
| 1 | Wendelrohr | -60 | 60 | CC | 15 | CPMS | 18 | 4,5 | CH₂Cl₂/Hexan 2:1 |
| V1a | konv. Rohr | -60 | 60 | CC | 15 | CPMS | 18 | 4,5 | CH₂Cl₂/Hexan 2:1 |
| V1b | Batch | -60 | 60 | CC | 15 | CPMS | 18 | -- | CH₂Cl₂/Hexan 2:1 |
| 2 | Wendelrohr | -70 | 70 | CC | 21 | BuPS | 35 | 6,0 | CH₂Cl₂/Hexan 2:1 |
| V2a | konv. Rohr | -70 | 70 | CC | 21 | BuPS | 35 | 6,0 | CH₂Cl₂/Hexan 2:1 |
| V2b | Batch | -70 | 70 | CC | 21 | BuPS | 35 | -- | CH₂Cl₂/Hexan 2:1 |
| 3 | Wendelrohr | -50 | 55 | p-DCC | 11 | CPMS | 22 | 2,2 | CH₂Cl₂/Hexan 2:1 |
| V3a | konv. Rohr | -50 | 55 | p-DCC | 11 | CPMS | 22 | 2,2 | CH₂Cl₂/Hexan 2:1 |
| 4 | Wendelrohr | -70 | 57 | p-DCC | 17 | Pyridin | 34 | 5,5 | CH₂Cl₂/Hexan/ Toluol 1:1:1 |
| V4 | konv. Rohr | -70 | 57 | p-DCC | 17 | Pyridin | 34 | 5,5 | CH₂Cl₂/Hexan/ Toluol 1:1:1 |
| 5 | Wendelrohr | -70 | 40 | p-DCC | 10 | BuPS | 20 | 7,5 | CH₂Cl₂/Toluol 2:1 |
| V5 | konv. Rohr | -70 | 40 | p-DCC | 10 | BuPS | 20 | 7,5 | CH₂Cl₂/Toluol 2:1 |
| 6 | Wendelrohr | -70 | 200 | CC | 30 | Pyridin | 70 | 8,0 | CH₂Cl₂/Toluol 2:1 |
| V6 | Batch | -70 | 200 | CC | 30 | Pyridin | 70 | -- | CH₂Cl₂/Toluol 2:1 |

| | | | | | | | | | |
|---|---|---|---|---|---|---|---|---|---|
| V = nicht erfindungsgemässe Versuche; 1) Mengenangaben bei Batchversuchen sind absolut und nicht auf eine Zeiteinheit bezogen zu verstehen 2) CC = Cumylchlorid (2-Chlor-2-phenylpropan), p-DCC = para-Dicumylchlorid (1,4-Bis-(2-chlorpropan-2-yl)benzol 3) CPMS = Dicyclopentyldimethoxysilan; BuPS = Isobutyl-Isopropyldimethoxysilan 4) Strömungsgeschwindigkeit im Reaktor 5) Zahlenangaben stehen für Volumenverhältnisse der Lösungsmittel | | | | | | | | | |

**Tabelle 2: Polymereigenschaften**

| Beispiel | Molekulargewicht Mₙ [Dalton] | Dispersität [M_{w}/Mₙ] |
|---|---|---|
| 1 | 10100 | 1,17 |
| V1a | 9700 | 1,38 |
| V1b | 10200 | 1,26 |
| 2 | 6800 | 1,18 |
| V2a | 6400 | 1,26 |
| V2b | 6900 | 1,30 |
| 3 | 15300 | 1,20 |
| V3 | 14100 | 1,61 |
| 4 | 9400 | 1,31 |
| V4 | 8300 | 1,70 |
| 5 | 12600 | 1,12 |
| V5 | 11500 | 1,34 |
| 6 | 4800 | 1,36 |
| V6 | 4000 | 1,58 |

## Patentansprüche

1. Verfahren zur Herstellung von Homo- und Copolymeren des Isobutens durch kontinuierliche kationische Polymerisation von Isobuten oder Mischungen von Isobuten mit ethylenisch ungesättigten Comonomeren in Gegenwart eines Initiatorsystems umfassend:
i) eine Lewis-Säure, ausgewählt unter kovalenten Metall-Halogen-Verbindungen und kovalenten Halbmetall-Halogen-Verbindungen,
ii) wenigstens eine aprotische organische Verbindng I mit wenigstens einer funktionellen Gruppe FG, die unter Polymerisationsbedingungen mit der Lewis-Säure ein Carbokation oder einen kationogenen Komplex bildet
in einem gegenüber der Lewis-Säure inerten organischen Lösungsmittel, **dadurch gekennzeichnet, dass** man die Polymerisation in einem rohrförmigen Durchflussreaktor durchführt, der mehrere Krümmungen mit alternierender Krümmungsrichtung aufweist.

2. Verfahren nach Anspruch 1, **dadurch gekennzeichnet, daß** der Reaktor als Rohrwicklung um mindestens 2, im wesentlichen parallele Achsen, ausgebildet ist.

3. Verfahren nach Anspruch 2, **dadurch gekennzeichnet, daß** der Reaktor als Rohrwicklung um mehrere in einer Ebene angeordnete, im wesentlichen parallele Achsen, ausgebildet ist.

4. Verfahren nach Anspruch 2, **dadurch gekennzeichnet, daß** der Reaktor als Rohrwicklung um n im wesentlichen parallele, senkrecht durch die Ecken eines im wesentlichen gleichseitigen Polygons verlaufende Achsen ausgebildet ist, wobei n eine ungerade Zahl 3 ist.

5. Verfahren nach einem der Ansprüche 2 bis 4, **dadurch gekennzeichnet, daß** die Ganghöhe der Wicklung das 2- bis 10-fache des Rohrdurchmessers (bei kreisförmigem Rohrquerschnitt) bzw. der in Gangrichtung zeigenden Achse (bei ellipsoidem Rohrquerschnitt) beträgt.

6. Verfahren nach einem der Ansprüche 2 bis 5, **dadurch gekennzeichnet, daß** die Achsen durch Rohre oder Stäbe (1) gebildet sind.

7. Verfahren nach Anspruch 6, **dadurch gekennzeichnet, daß** der Abstand zwischen den Rohren oder Stäben (1) das 1- bis 3-fache des Rohrdurchmessers (2) beträgt.

8. Verfahren nach einem der Ansprüche 2 bis 5, **dadurch gekennzeichnet, daß** der Wendelrohrreaktor in Form einer im wesentlichen selbsttragenden Wicklung vorliegt.

9. Verfahren nach einem der vorhergehenden Ansprüche, **dadurch gekennzeichnet, dass** die Lewis-Säure ausgewählt ist unter BF₃, TiCl₄, SnCl₄, BCl₃, FeCl₃, VCl₅, AlCl₃ und R^{c}-AlCl₂, worin R^{c} für C₁-C₆-Alkyl steht.

10. Verfahren nach einem der vorhergehenden Ansprüche, **dadurch gekennzeichnet, dass** die funktionelle Gruppe in Verbindung I die allgemeine Formel FG 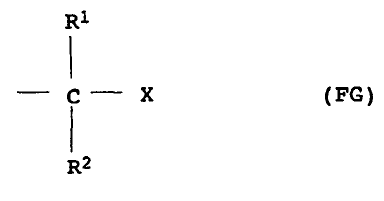 aufweist, worin
X ausgewählt ist unter Halogen, C₁-C₆-Alkoxy und C₁-C₆-Acyloxy.
R¹ Wasserstoff oder Methyl bedeutet und
R² für Methyl steht, oder mit R¹ oder dem Molekülteil, an den die funktionelle Gruppe FG gebunden ist, einen C₅-C₆-Cycloalkylring bildet, R² auch Wasserstoff bedeuten kann, wenn die funktionelle Gruppe FG an ein aromatisches oder olefinisch ungesättigtes C-Atom gebunden ist.

11. Verfahren nach einem der vorhergehenden Ansprüche, **dadurch gekennzeichnet, dass** man die Verbindung I in einer Menge von 10⁻⁴ bis 10⁻¹ mol, bezogen auf die funktionellen Gruppen FG der Verbindung I, je mol polymerisierbare Monomere einsetzt.

12. Verfahren nach einem der vorhergehenden Ansprüche, **dadurch gekennzeichnet, dass** man die Lewis-Säure und die Verbindung I in einem Molverhältnis im Bereich von 20:1 bis 1:50, bezogen auf die funktionellen Gruppen FG, einsetzt.

13. Verfahren nach einem der vorhergehenden Ansprüche, **dadurch gekennzeichnet, dass** das Initiatorsystem zusätzlich wenigstens eine nicht polymerisierbare, aprotische Donor-Verbindung mit einem freien Elektronenpaar umfasst.

14. Verfahren nach Anspruch 13, **dadurch gekennzeichnet, dass** die Donor-Verbindung ausgewählt ist unter siliziumorganischen Verbindungen II mit wenigstens einer Si-O-Bindung.

15. Verfahren nach Anspruch 14, **dadurch gekennzeichnet, dass** die siliziumorganische Verbindung die allgemeine Formel II aufweist:
R^{a}ₙSi(OR_{b})₄₋ₙ (II)
worin n für 1, 2 oder 3 steht,
R^{a} gleich oder verschieden sein können und unabhängig voneinander C₁-C₂₀-Alkyl, C₅-C₇-Cycloalkyl, Aryl oder Aryl-C₁-C₄-alkyl bedeuten, wobei die drei letztgenannten Reste auch eine oder mehrere C₁-C₁₀-Alkylgruppen als Substituenten aufweisen können, und
R^{b} gleich oder verschieden sind und C₁-C₂₀-Alkyl bedeuten oder für n = 1 oder 2 zwei verschiedene Reste R^{b} auch eine 2- oder 3-gliedrige Alkylen-Einheit bilden können.

16. Verfahren nach einem der Ansprüche 14 oder 15, **dadurch gekennzeichnet, dass** das Molverhältnis von Siliziumatomen in der siliziumorganischen Verbindung II und (Halb)Metallatomen in der Lewis-Säure im Bereich von 0,05:1 bis 50:1 liegt.

17. Verfahren nach einem der vorhergehenden Ansprüche, **dadurch gekennzeichnet, dass** das Lösungsmittel ausgewählt ist unter aliphatischen und cycloaliphatischen Kohlenwasserstoffen, aromatischen Kohlenwasserstoffen sowie inerten Halogenkohlenwasserstoffen.

18. Verfahren nach einem der vorhergehenden Ansprüche, **dadurch gekennzeichnet, dass** man die Polymerisation durch Zugabe einer protischen Verbindung abbricht.

19. Verfahren nach einem der Ansprüche 1 bis 12, **dadurch gekennzeichnet, dass** man die Polymerisation durch Zugabe einer Tri(alkyl)allylsilan-Verbindung abbricht.

## Claims

1. A process for the preparation of homo- and copolymers of isobutene by continuous cationic polymerization of isobutene or mixtures of isobutene with ethylenically unsaturated comonomers in the presence of an initiator system comprising:
i) a Lewis acid selected from covalent metal-halogen compounds and covalent semimetal-halogen compounds and
ii) at least one aprotic organic compound I having at least one functional group FG which forms a carbocation or a cationic complex with the Lewis acid under polymerization conditions
in an organic solvent inert with respect to the Lewis acid, wherein the polymerization is carried out in a tubular flow-through reactor which has a plurality of curves having an alternating direction of curvature.

2. The process according to claim 1, wherein the reactor is in the form of a tube winding about at least 2, substantially parallel axes.

3. The process according to claim 2, wherein the reactor is in the form of a tube winding about a plurality of substantially parallel axes arranged in a plane.

4. The process according to claim 2, wherein the reactor is in the form of a tube winding about n substantially parallel axes passing perpendicularly through the vertices of a substantially equilateral polygon, n being an odd number 3.

5. The process according to any of claims 2 to 4, wherein the pitch of the winding is from 2 to 10 times the tube diameter (in the case of a circular tube cross section) or the axis pointing in the pitch direction (in the case of an ellipsoidal cross section).

6. The process according to any of claims 2 to 5, wherein the axes are formed by tubes or rods (1).

7. The process according to claim 6, wherein the distance between the tubes or rods (1) is from 1 to 3 times the tube diameter (2).

8. The process according to any of claims 2 to 5, wherein the helical tube reactor is present in the form of a substantially self-supporting winding.

9. The process according to any of the preceding claims, wherein the Lewis acid is selected from BF₃, TiCl₄, SnCl₄, BCl₃, FeCl₃, VCl₅, AlCl₃ and R^{c}-AlCl₂, where R^{c} is C₁-C₆-alkyl.

10. The process according to any of the preceding claims, wherein the functional group in the compound I is of the formula FG 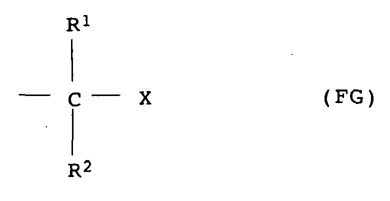 where
X is selected from halogen, C₁-C₆-alkoxy and C₁-C₆-acyloxy,
R¹ is hydrogen or methyl and
R² is methyl or, with R¹ or a moiety to which the functional group FG is bonded, forms a C₅-C₆-cycloalkyl ring, and R² may also be hydrogen if the functional group FG is bonded to an aromatic or olefinically unsaturated carbon atom.

11. The process according to any of the preceding claims, wherein the compound I is used in an amount of from 10⁻⁴ to 10⁻¹ mol, based on the functional groups FG of the compound I, per mole of polymerizable monomers.

12. The process according to any of the preceding claims, wherein the Lewis acid and the compound I are used in a molar ratio of from 20:1 to 1:50, based on the functional groups FG.

13. The process according to any of the preceding claims, wherein the initiator system additionally comprises at least one nonpolymerizable, aprotic donor compound having a free electron pair.

14. The process according to claim 13, wherein the donor compound is selected from organosilicon compounds II having at least one Si-O bond.

15. The process according to claim 14, wherein the organosilicon compound is of the formula II:
R^{a}ₙSi(OR_{b})₄₋ₙ (II)
where n is 1, 2 or 3,
R^{a} may be identical or different and, independently of one another, are C₁-C₂₀-alkyl, C₅-C₇-cycloalkyl, aryl or aryl-C₁-C₄-alkyl, it being possible for the three last-mentioned radicals also to have one or more C₁-C₁₀-alkyl groups as substituents, and
R^{b} are identical or different and are C₁-C₂₀-alkyl or, where n = 1 or 2, two different radicals R^{b} may also form a 2- or 3-membered alkylene unit.

16. The process according to either of claims 14 and 15, wherein the molar ratio of silicon atoms in the organosilicon compound II to (semi)metal atoms in the Lewis acid is from 0.05:1 to 50:1.

17. The process according to any of the preceding claims, wherein the solvent is selected from aliphatic and cycloaliphatic hydrocarbons, aromatic hydrocarbons and inert halohydrocarbons.

18. The process according to any of the preceding claims, wherein the polymerization is stopped by adding a protic compound.

19. The process according to any of claims 1 to 12, wherein the polymerization is stopped by adding a tri(alkyl)allylsilane compound.

## Revendications

1. Procédé de fabrication d'homopolymères et copolymères de l'isobutène par polymérisation cationique en continu d'isobutène ou de mélanges d'isobutène avec des comonomères éthyléniquement insaturés en présence d'un système d'initiateur comprenant :
i) un acide de Lewis, choisi parmi des composés covalents métal-halogène et des composés covalents semi-métal-halogène,
ii) au moins un composé I organique aprotique avec au moins un groupe fonctionnel FG qui forme dans les conditions de polymérisation avec l'acide de Lewis, un carbocation ou un complexe cationogène,
dans un solvant organique inerte par rapport à l'acide de Lewis, **caractérisé en ce qu'**on effectue la polymérisation dans un réacteur tubulaire à écoulement, lequel présente plusieurs courbures avec direction des courbures en alternance.

2. Procédé selon la revendication 1, **caractérisé en ce que** le réacteur est configuré comme un enroulement tubulaire autour d'au moins 2 axes essentiellement parallèles.

3. Procédé selon la revendication 2, **caractérisé en ce que** le réacteur est configuré comme un enroulement tubulaire autour de plusieurs axes essentiellement parallèles agencés sur un niveau.

4. Procédé selon la revendication 2, **caractérisé en ce que** le réacteur est configuré comme un enroulement tubulaire autour de n axes essentiellement parallèles, s'étendant à la verticale par les coins d'un polygone essentiellement équilatéral, n étant un nombre impair 3.

5. Procédé selon l'une des revendications 2 à 4, **caractérisé en ce que** le pas de l'enroulement va du double au décuple du diamètre de tube (pour une coupe transversale de tube circulaire) ou de l'axe allant dans le sens du pas (pour une coupe transversale de tube ellipsoïdale).

6. Procédé selon l'une des revendications 2 à 5, **caractérisé en ce que** les axes sont formés par des tubes ou des barres (1).

7. Procédé selon la revendication 6, **caractérisé en ce que** la distance entre les tubes ou les barres (1) va du simple au triple du diamètre de tube (2).

8. Procédé selon l'une des revendications 2 à 5, **caractérisé en ce que** le réacteur à tubes hélicoïdaux est sous forme d'enroulement essentiellement autoporteur.

9. Procédé selon l'une des revendications précédentes, **caractérisé en ce que** l'acide de Lewis est choisi parmi BF₃, TiCl₄, SnCl₄, BCl₃, FeCl₃, VCl₅, AlCl₃ et R^{c}-AlCl₂, R^{c} représentant un alkyle en C₁-C₆.

10. Procédé selon l'une des revendications précédentes, **caractérisé en ce que** le groupe fonctionnel présente dans le composé I la formule générale F6 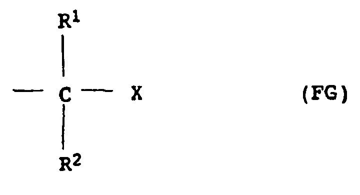 dans laquelle
X est choisi parmi un halogène, un alcoxy en C₁-C₆ et un acyloxy en C₁-C₆,
R¹ signifie hydrogène ou méthyle, et
R² représente un méthyle ou forme avec R¹ ou avec la partie de molécule sur laquelle le groupe fonctionnel FG est lié, un cycle cycloalkyle en C₅-C₆, R² pouvant signifier également un hydrogène quand le groupe fonctionnel FG est lié sur un atome de carbone aromatique ou oléfiniquement insaturé.

11. Procédé selon l'une des revendications précédentes, **caractérisé en ce qu'**on utilise le composé I dans une quantité de 10⁻⁴ à 10⁻¹ moles, sur base du groupe fonctionnel FG du composé I, par mole de monomère polymérisable.

12. Procédé selon l'une des revendications précédentes, **caractérisé en ce qu'**on utilise l'acide de Lewis et le composé I dans un rapport molaire compris dans l'intervalle entre 20:1 et 1:50, sur base des groupes fonctionnels FG.

13. Procédé selon l'une quelconque des revendications précédentes, **caractérisé en ce que** le système d'initiateur comprend en outre au moins un composé donneur non polymérisable aprotique avec une paire d'électrons libre.

14. Procédé selon la revendication 13, **caractérisé en ce que** le composé donneur est choisi parmi les composés II d'organosilicium avec au moins une liaison Si-0.

15. Procédé selon la revendication 14, **caractérisé en ce que** le composé d'organosilicium présente la formule générale II
**R^{a}ₙSi(OR_{b})₄₋ₙ** **(II)**
dans laquelle n représente 1, 2 ou 3,
R^{a} peuvent être identiques ou différents et signifier, indépendamment l'un de l'autre, un alkyle en C₁-C₂₀, un cycloalkyle en C₅-C₇, un aryle ou un aryle-alkyle en C₁-C₄, où les trois derniers radicaux peuvent présenter également un ou plusieurs groupes alkyle en C₁-C₁₀ comme substituants, et
R^{b} sont identiques ou différents et signifient un alkyle en C₁-C₂₀ ou deux radicaux R^{b} différents peuvent également former pour n=1 ou 2 une unité alkylène à 2 ou 3 membres.

16. Procédé selon l'une des revendications 14 ou 15, **caractérisé en ce que** le rapport molaire entre les atomes de silicium dans le composé II d'organosilicium et les atomes de (semi)métal dans l'acide de Lewis est situé dans l'intervalle compris entre 0,05:1 et 50:1.

17. Procédé selon l'une des revendications précédentes, **caractérisé en ce que** le solvant est choisi parmi les hydrocarbures aliphatiques et cycloaliphatiques, les hydrocarbures aromatiques ainsi que les halogénohydrocarbures inertes.

18. Procédé selon l'une des revendications précédentes, **caractérisé en ce qu'**on arrête la polymérisation par l'addition d'un composé protique.

19. Procédé selon l'une des revendications 1 à 12, **caractérisé en ce qu'**on arrête la polymérisation par l'addition d'un composé tri(alkyl)allylsilane.
